# FASCICULE DE BREVET EUROPEEN

(11) **EP 1 660 232 B1**
(45) Date de publication et mention de la délivrance du brevet: **22.07.2009**
(21) Numéro de dépôt: 04786259.4
(22) Date de dépôt: 04.08.2004
(51) Int. Cl.: B01J 23/88, B01J 27/24, B01J 37/02, B01J 37/20

(54) **CATALYSEUR D'HYDROTRAITEMENT ET/OU D'HYDROCRAQUAGE D'HYDROCARBURES ET SA PREPARATION**
HYDROTREATING- UND/ODER HYROCRACKING-KATALYSATOR FÜR KOHLENWASSERSTOFFE UND HERSTELLUNG DAVON
HYDROTREATING AND/OR HYDROCRACKING CATALYST OF HYDROCARBONS AND PREPARATION THEREOF

(30) Priorité: 08.08.2003 FR 0309768
(43) Date de publication de la demande: 31.05.2006
(73) Titulaire: TOTAL RAFFINAGE MARKETING, 92800 Puteaux (FR)
(72) Inventeur: CHOLLEY, Thierry, B-1180 Bruxelles (BE); DATH, Jean-Pierre, B-7970 Beloeil Hainaut (BE)
(74) Mandataire: Doressamy, Clarisse
(86) Numéro de dépôt international: PCT/FR2004/002085
(87) Numéro de publication internationale: WO 2005/016518

(56) Documents cités:
- EP-A- 0 181 035
- EP-A- 1 043 069
- WO-A-02/24836
- WO-A-95/32801

## Description

La présente invention concerne un catalyseur d'hydroconversion, son mode de préparation et l'utilisation de ce catalyseur dans un procédé d'hydrotraitement et/ou d'hydrocraquage d'hydrocarbures, notamment ceux issus de coupes pétrolières de point d'ébullition compris de préférence entre 40 et 560°C.

Actuellement, la demande en composés hydrocarbonés désulfurés, déazotés et déaromatisés, s'accroît et de nombreuses études sont menées en vue de développer des catalyseurs de plus en plus efficaces vis-à-vis de la purification des hydrocarbures. Cependant, ces nouveaux catalyseurs sont beaucoup plus coûteux et ne sont accessibles qu'auprès d'un nombre limité de producteurs. En outre, dès la première régénération de ces catalyseurs ils présentent une activité bien inférieure à leur activité initiale à l'état neuf dans les mêmes conditions opératoires. Seul, un traitement supplémentaire de réjuvénation spécifique permet parfois de retrouver cette activité initiale et donc d'atteindre des teneurs en soufre inférieures à 10 ppm.

Aujourd'hui, de nombreux catalyseurs dits « classiques », à base de supports en oxyde(s) réfractaire(s) et contenant des combinaisons de métaux des groupes VIB et VIII sont utilisés en raffinerie à l'état neuf ou régénéré soit en hydrotraitement, soit en hydrocraquage. S'il s'avère impossible d'augmenter notablement leur activité en désulfuration et/ou en déazotation, ces catalyseurs devront être récupérés, stockés ou détruits, lorsque les spécifications imposées aux carburants deviendront si restrictives qu'il ne sera plus possible de les utiliser. Ce stockage ou cette élimination de solides pourrait en outre être soumis à des contraintes environnementales et de sécurité et engendrer des surcoûts importants pour les raffineurs.

La Demanderesse a donc envisagé de rendre plus efficaces les catalyseurs à base d'oxyde(s) réfractaire(s) et de métaux des groupes VIB et VIII, en les modifiant par des moyens nouveaux, pour leur conférer des activités en désulfuration et en déazotation au moins équivalentes à celles des meilleurs catalyseurs du marché, et surtout supérieures à leur propre activité après régénération.

Tous les catalyseurs d'hydrotraitement ou d'hydrocraquage sont nécessairement sulfures avant d'être utilisés. Cette sulfuration peut être faite soit *in situ* dans le réacteur d'hydrotraitement, soit *ex situ* au moyen d'hydrogène sulfuré, de mercaptans, de sulfures, de polysulfures et/ou de soufre, ces composés étant introduits seuls, en mélange avec un solvant ou en même temps que la charge. Certains de ces catalyseurs sont modifiés avant sulfuration, cette modification consistant à traiter ces catalyseurs par des composés chélatants, complexants ou sulfurants. Il est ainsi connu de modifier ces catalyseurs au moyen d'acides de type thioglycolique ou encore de thioalcools, de composés thioacétoniques et de thiodiazoles ou encore de thiocyanates tels que proposés notamment par les brevets suivants : EP 289211, EP 300629, EP 338788, EP 357295, EP 456592, EP 478365 et EP 506206. D'autres catalyseurs ont été modifiés par traitement au moyen de composés organiques alcool-acides (EP 482817), de mono-, di- ou polyalcools éventuellement étherifiés (EP 601722, US 3954673, US 4012340, WO 01/76741), de composés de types urée, polyamines, EDTA, hydrazine et autres composés azotés (EP 181035, EP 335754, EP 1043069, WO 01/76741. US 3954673 et US 4012340).

Ainsi, le document EP 1 043 069 décrit un procédé de préparation d'un catalyseur d'hydrotraitement sulfuré formé d'un support comprenant au moins 50% d'alumine, et comprenant au moins un métal d'hydrogénation et un composé organique comprenant au moins un atome d'azote lié de façon covalente et au moins un groupement carbonyle. Aucun des composés organiques cités ne comporte de groupement oxime.

Le document EP 0 181 035 décrit un procédé de préparation d'un catalyseur à base de silice qui comprend l'imprégnation du support par une solution aqueuse obtenue par mélange d'un composé à base de métal d'hydrogénation avec un ligand organique contenant de l'azote en présence d'eau. Aucun des ligands cités ne comporte de groupement oxime.

Le document WO95/32801 décrit un procédé de traitement d'un catalyseur pour en augmenter son efficacité qui consiste à mettre en contact un catalyseur de procédé de raffinerie avec un agent réducteur choisi notamment parmi des composés comportant un seul groupement oxime.

Toutes ces modifications visent à améliorer l'efficacité des catalyseurs en hydrotraitement, plus particulièrement en désulfuration. Cependant ces modifications ne permettent pas toujours d'atteindre les teneurs en soufre requises par les spécifications attendues en Europe à l'horizon 2005 dans les distillats moyens issus de la distillation directe ou de coupes raffinées, utilisés comme composants des carburants Diesel.

Dans certains pays comme la Suède ou les Etats Unis, et notamment en Californie, la teneur en soufre total des gazoles est déjà limitée à 0,005 % en poids et cette limitation pourrait se généraliser à terme dans les pays de l'O.C.D.E. Pour l'Europe, cet objectif de 0,005 % en poids de soufre total devrait être atteint en 2005, mais on parle déjà de 0,001% pour l'horizon 2010.

Dans ce but, la Demanderesse a conçu un nouveau type de catalyseur d'hydrotraitement à base d'oxydes réfractaires et de métaux des groupes VIB et VIII de la classification périodique des éléments, dont les performances sont améliorées en désulfuration et/ou en déazotation.

La présente invention a donc pour premier objet un catalyseur d'hydroconversion d'hydrocarbures, comprenant un support d'oxyde(s) réfractaire(s), au moins un métal du groupe VIII et au moins un métal du groupe VIB de la Classification Périodique des éléments, caractérisé en ce qu'il comprend un composé organique comprenant au moins deux groupements oxime.

On entend par groupement oxime un groupement choisi parmi les groupements oximes et éthers d'oximes selon la norme IUPAC, de formule :

>C=NOR₁ (I)

avec R₁ choisi parmi l'hydrogène, les groupements alkyle, allyle, aryle, alcényle ou cycloaliphatiques, et leurs combinaisons, ces groupements pouvant être substitués par au moins un groupement donneur d'électrons.

Par doublets d'électrons libres, on entendra ci-après des doublets d'électrons qui peuvent être à l'origine de liaisons covalentes, datives, coordinatives avec les métaux de transition présents sur le support.

En effet, la Demanderesse a établi que la présence sur le catalyseur d'un composé organique comprenant au moins deux groupements oxime permet, après sulfuration du catalyseur, d'atteindre des teneurs en soufre identiques dans les hydrocarbures avec une température de réaction de désulfuration inférieure d'au moins 5 à 25°C, toutes autres conditions opératoires de procédé - pression, quantité d'hydrogène et vitesse spatiale horaire (v/v/h) - étant identiques par ailleurs. Un tel gain d'activité permet d'envisager l'obtention de teneurs en soufre bien inférieurs à 50 ppm et même inférieures à 10 ppm dans les hydrocarbures traités, en faisant varier ces mêmes conditions opératoires.

Pour obtenir le composé organique selon l'invention, il est possible de faire réagir une amine de formule (11) ci-après 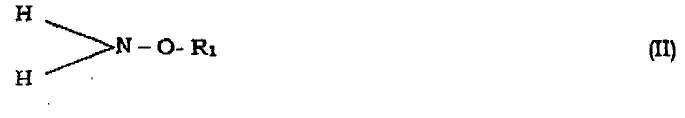 dans laquelle R₁ est choisi parmi l'hydrogène, les groupements alkyle, allyle, aryle, alcényle ou cycloaliphatiques, et leurs combinaisons, ces groupements pouvant être substitués par des groupements donneurs d'électrons, avec un composé carbonylé de formule (III) ci-après 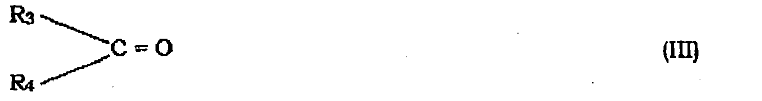 avec R₃ et R₄ choisis, identiques ou différents, parmi l'hydrogène pour seulement l'un d'entre eux, les groupements hydrocarbonés linéaires, ramifiés ou cycliques de type alkyle, aryle, allyle et alcényle et leurs combinaisons, éventuellement substitués par des groupements donneurs d'électrons.

Dans un mode de mise en oeuvre préféré, l'anime de formule (11) est l'hydroxylamine et le composé de formule (III) est choisi parmi les composés carbonylés du groupe formé par les cétones et les aldéhydes.

On ne sortirait pas du cadre de l'invention en utilisant un composé organique issu d'une synthèse selon les réactions décrites dans la seconde édition de ORGANIC CHEMISTRY de Francis A.Carey, p.698 et 712, et dans Advanced Organic Chemistry, Reaction, Mechanisms and Structure, de Jerry March (troisième édition).

Dans le cadre de la présente invention, le composé organique comprenant ces groupement oxime comprend une chaîne carbonée principale comprenant de 1 à 40 atomes de carbone, linéaire, ramifiée, ou en tout ou partie cyclisée, éventuellement interrompue par des hétéroatomes de soufre, d'azote ou d'oxygène, deux ou plusieurs groupements oxime, les atomes de carbone pouvant être substitués par l'hydrogène, par des groupements alkyle, aryle, allyle, alcényle et leurs combinaisons, par au moins deux groupements oxime et/ou au moins un groupement hydroxylé, sulfuré, polysulfuré, un groupement thiol, thioacide, thioéther et thioester, un groupement sulfone et sulfoxyde, un groupement aminé, amide et imine, des groupements carbonyle, carboxylique, éther et ester, des groupements cétone et aldéhyde, des groupements nitrés, des phosphines et tout autre groupement présentant des doublets d'électrons libres.

Dans une forme de mise en oeuvre préférée ne faisant pas partie de la présente invention, le composé organique utilise comprend un seul groupement oxime.

Un tel composé avec un unique groupe oxime, ou monooxime, peut être choisi parmi les alkyloximes, les alcényloximes, les allyloximes, les aryloximes et leurs combinaisons, les alcanoneoximes, les cycloalkyloximes, les alcanaloximes et les benzaldéhyde oximes, substitués ou non par des groupements alkyle, aryle, arylalkyle et alkylaryle.

Dans un premier type de composé monooxime, le composé organique est choisi dans le groupe constitué par le 2-octanone oxime, le 3-heptagone oxime, le tricosanone oxime, l'heptanone oxime, le phényldodécanone oxime, le 1,3-diphénylacétone oxime, le benzophénone oxime, le 2-phénylcyclohexanone oxime, le fluorénone oxime, le diméthylbenzaldéhyde oxime, le benzaldoxime, l'acétophénone oxime, le méthylphénanthryl oxime, le 2 méthylbenzaldéhyde oxime, le cyclooctanone oxime, le 2-phênylcyclohexanone oxime, le cyclo-hexanone oxime, l'o-éthylhexanone oxime, l'isobutyraldéhyde oxime et l'acétone oxime.

Dans un deuxième type de composé organique le composé organique comprend un groupement oxime et au moins un deuxième groupement présentant des doublets d'électrons libres.

Si ce composé organique comprend au moins deux groupements oximes selon l'invention le composé organique est choisi parmi la glyoxime, les monoalkylglyoximes, les dioximes et les polyoximes comprenant des groupements alkyle, aryle, alkylaryle et arylalkyle. Parmi ces composés, les composés dioximes sont choisis de préférence parmi le glyoxime, les monoalkyle et dialkyle oximes à chaînes carbonées comprenant de 1 à 10 atomes de carbone supportant de l'hydrogène et des groupements alkyle, aryle , alkylaryle et arylalkyle. Le dioxime préféré est le diméthylglyoxime.

Si le deuxième groupement donneur de doublet électronique n'est pas un groupement oxime selon un mode de réalisation ne faisant pas partie de la présente invention il peut être choisi parmi les groupements hydroxylés, sulfurés, polysulfurés, des groupements thiols, thioacides, thioéthers et thioesters, des groupements sulfones et sulfoxydes, des groupements amines, amides et amines, des groupements carbonylés, carboxyliques, éthers et esters, des groupements cétones et aldéhydes, des groupements nitrées, des phosphines et tout autre groupement présentant des doublets d'électrons libres.

Plus particulièrement, selon un mode de réalisation ne faisant pas partie de la présente invention, le composé organique est choisi parmi les mercaptoalcane oximes, les alcoxybenzaldéhyde oximes, les alcoxyarylbenzaldéhyde oximes, les nitrobenzaldéhyde oximes et les alcoxybenzaldéhyde oximes, les hydroxybenzaldéhyde oximes, les alcoxybenzophénone oximes, les carboxaldéhyde oximes substitués, les nitroarylalcanone oximes, les aminobenzaldéhyde oximes, les benzamide oximes, les acétyl oximes substitués, les acétyl-furan, - théophène et -pyridine oximes, les hydroxyalcanal oximes, les amidooximes, les acétophénones oximes, les oxime hydrazones, les polyalcanol oximes, ces groupements étant éventuellement substitués pas des groupemente alkyle, aryle, arylalkyle, alkylaryle, pyridinyle, thiophènyle et furanyle, sulfurés, alcoxylés, aminés, cyanurés, nitrés et hydroxylés.

De préférence, selon un mode de réalisation ne faisant pas partie de la présente invention, le composé comprend un groupement oxime et au moins un deuxième groupement présentant des doublets d'électrons libres, sera choisi parmi le d-galactose oxime, le benzamide oxime, le benzyl oxime hydrazone, le benzoïchydrazide oxime, l'éthyl-2-oxobutyrate-2-oxime, le 2,3 butanedione monooxime, l'isatine-3-oxime, l'éthyl(hydro-xyimino)cyanoacétate, le di-2-pyridyl-cétone oxime, l'hydroxypentanal oxime, 4-pyriylamidooxime, le nitrobenzaldéhyde oxime, le méthoxybenzophénone oxime, l'hydroxybenzaldéhyde oxime, le diméthylaminobenzaldéhyde oxime, le 2-acétylpyridine oxime, le 4-hexadécyloxybenzaldéhyde oxime, le méthylthioacétaloxime, le diméthoxy- nitrobenzaldéhyde oxime, le méthoxyacetophénone oxime, le méthylbenzamide oxime, le thiophènecarboxaldéhyde oxime, l'acétylthiophène oxime, l'aminobenzo-phénone oxime, l'acétyl(méthyl)thiophène oxime, 2-(4-méthoxy-phényl]glyoxal-1 oxime, le 1-mercapto-propane-2-oxime, l'aminophényl-éthane oxime, l'(octyloxyphényl)phényl-methanone, l'acétylfurane oxime, l'acétonaphtoquinone oxime, le 4-méthoxy-3-nitrobenzaldéhyde oxime, l'éthoxybenzaldéhyde oxime, le méthoxybenzaldéhyde oxime, le 2-(4-méthoxyphényl)glyoxal 1-oxime,le 1-mercapto-propan-2-one oxime, le 1-(3-nitrophényl) éthanone oxime, le phénanthrène quinone-9-oxime, l'o-(4-nitrophényl)acétone oxime, les 2(3 ou 4) pyridinaldoxime.

De préférence, le catalyseur est un catalyseur constitué d'un support d'oxyde réfractaire, alumine, silice et/ou silice-alumine contenant de 0,1 à 10 % en poids d'un métal du groupe VIII, de préférence du nickel et/ou du cobalt, et de 1 à 20 % en poids d'un métal du groupe VIB, de préférence du molybdène.

Le catalyseur selon l'invention contient de préférence au moins 0,001 mole du composé organique comprenant au moins deux groupements oxime. Plus préférentiellement, il contient de 0,001 mole à 10 moles du dit composé par mole de métaux des groupes VIB et VIII.

Un deuxième objet de l'invention est un procédé de préparation du catalyseur d'hydrotraitement défini ci-dessus caractérisé en ce que le composé organique comprenant au moins deux groupements oxime, d'origine commerciale ou obtenu par synthèse, dilué dans un solvant, de préférence dans un mélange d'hydrocarbures, est mis en contact avec le catalyseur comprenant un support d'oxyde(s) réfractaire(s), au moins un métal du groupe VIII et au moins un métal du groupe VIB, c'est-à-dire avec un catalyseur classique commercial.

Dans un mode de réalisation particulier de l'invention, le composé organique comprenant au moins deux groupements oxime résulte de la réaction d'un composé carbonylé de formule (III) contenu ou non dans les hydrocarbures à traiter, avec une amine de formule (II), en maintenant le mélange à une température comprise entre la température ambiante et 100 °C, sous une pression égale ou supérieure à la pression atmosphérique.

Dans une première variante du procédé, le composé organique est préparé *in situ* dans le réacteur d'hydroconversion, dans les hydrocarbures à traiter. Par exemple, on introduit l'hydroxylamine dans un mélange d'hydrocarbures contenant naturellement des composés carbonylés ou dans lequel on a dilué des composés carbonylés synthétiques, avant de mettre ce mélange en contact avec le catalyseur.

Dans une deuxième variante, le composé organique est préparé *ex situ*, c'est-à-dire en dehors du réacteur d'hydroconversion, puis est déposé ou imprégné sur le catalyseur, ce dépôt ou cette imprégnation pouvant avoir lieu dans le réacteur ou à l'extérieur de celui-ci.

Bien entendu, toute variante de ce procédé accessible à l'homme du métier entre dans le cadre de la présente invention.

Un troisième objet de l'invention est l'utilisation du catalyseur selon l'invention dans un procédé d'hydrotraitement et/ou dhydrocraquage d'hydrocarbures, après sulfuration *in situ* ou *ex situ* de celui-ci au moyen d'au moins un composé choisi parmi l'hydrogène sulfuré, le soufre, le CS₂, les mercaptans, les sulfures et/ou les polysulfures, les coupes hydrocarbonées à point d'ébullition inférieur à 400°C contenant des composés soufrés, ou autres composés à effet sulfurant, ce composé pouvant être introduit sous forme de gaz ou sous forme diluée dans un solvant, parfois même comme additif de la charge à hydrotraiter.

Les exemples donnés dans la suite de la présente description visent à illustrer et non à limiter l'invention.

### EXEMPLE I

Dans le présent exemple, on décrit un mode de préparation du catalyseur selon l'invention, ce catalyseur étant ensuite mis en oeuvre dans l'exemple suivant.

On part d'un catalyseur commercial (le catalyseur A), constitué d'une combinaison à 3% en poids de cobalt et à 10% en poids de molybdène supporté sur alumine, disponible sur le marché et utilisé communément par les raffineurs dans les unités d'hydrodésulfuration, destiné à être imprégné par la méthode dite à sec par le diméthylglyoxime (DMG).

Les grains du catalyseur A sont séchés à 150°C pendant 4 heures dans un four à moufle.

Parallèlement, on prépare dans un réacteur une solution dans du méthanol contenant 50g/l de DMG. Le méthanol est chauffé à 50°C sous agitation continue. Le DMG est alors introduit et l'agitation est maintenue quelques minutes jusqu'à dissolution complète.

On place alors 100g du catalyseur A séché dans un erlenmeyer de 2000 ml, puis 80 ml de la solution de DMG dans le méthanol sont versés sur le catalyseur ; il faut que le volume de la solution excède légèrement le volume poreux du catalyseur. Enfin, le mélange ainsi obtenu contenu dans l'erlenmeyer est agité vigoureusement pour assurer une imprégnation homogène de tous les grains du catalyseur A. On laisse le mélange reposer pour maturation pendant trois heures sans agitation. Le catalyseur Ci ainsi formé *ex situ* est filtré, puis disposé dans un four tubulaire avec circulation d'azote, pour y être séché à 80°C pendant 15 heures.

Une fois secs, les catalyseur A et Ci sont chargés chacun dans un réacteur d'hydrotraitement, puis sulfurés par un gazole additivé à 2 % en poids de diméthyldisulfure (DMDS) selon une procédure recommandée par le fabricant du catalyseur A.

### EXEMPLE II

Dans le présent exemple, on compare les activités des catalyseurs Ci et A à celles d'un catalyseur B du marché, après sulfuration selon la procédure recommandée par le fabricant, qui permet d'atteindre des teneurs en soufre après hydrotraitement inférieures à 10 ppm.

On appelle catalyseur B, un catalyseur Co/Mo sur alumine de dernière génération actuellement le plus performant du marché.

Après une phase de stabilisation des catalyseurs par passage de gazole pur, on introduit un mélange comprenant 75 % en poids de gazole et 25 % en poids d'une coupe hydrocarbonée 220-350°C, issue de craquage catalytique, usuellement appelé LCO (Light Cycle Oil). Les caractéristiques de cette charge sont données dans le Tableau I ci-après.

**TABLEAU I**

| Type de charge | Mélange 25% LCO-75% GO |
|---|---|
| Soufre (ppm) | 14447 |
| Densité à 15°C (g/ml) | 0,8684 |
| Mono-aromatiques (% en poids) | 18,7 |
| Di-aromatiques (% en poids) | 14,8 |
| Tri-aromatiques (% en poids) | 2,8 |
| Total Aromatiques (% en poids) | 36,3 |
| Azote (ppm) | 228 |
| Distillation selon la norme | |
| ASTM D86 (°C) | |
| Point initial | 203 |
| 5 vol% | 230 |
| 10 vol% | 244 |
| 20 vol% | 257 |
| 30 vol% | 268 |
| 40 vol% | 278 |
| 50 vol% | 289 |
| 60 vol% | 301 |
| 70 vol% | 314 |
| 80 vol% | 329 |
| 90 vol% | 347 |
| 95 vol% | 359 |
| Point final | 363 |

On réalise la réaction d'hydrotraitement sous une pression de 27.10⁵ Pa (27 bars) avec un rapport hydrogène/hydrocarbures (H₂/HC) de 130N1/l à une vitesse spatiale horaire (v/v/h) de 1h⁻¹ .

Pour comparer les activités en désulfuration et en déazotation, on ajuste la température de réaction de manière à atteindre soit 98% de désulfuration, soit 50% de déazotation de la charge. Plus cette température, pour un catalyseur donné, est basse en comparaison à la température correspondante pour le catalyseur de référence A, plus ce catalyseur est actif en désulfuration ou en déazotation.

Pour le catalyseur de référence A, les températures référencées T_{HDS} et T_{HDN}, respectivement, pour l'hydrodésulfuration et la déazotation, correspondent aux températures requises pour atteindre 98% de désulfuration et 50% de déazotation

Le catalyseur Cᵢ est préparé comme décrit dans l'Exemple I. Le catalyseur C'ᵢ a été préparé selon la méthode *in situ* dans un pilote CATATEST de 100 ml, dans lequel on a fait circuler une solution de DMG à 50 g/l dans du méthanol à une vitesse spatiale horaire de 4 h⁻¹, sous pression atmosphérique et à température ambiante, puis on a laissé l'ensemble maturer pendant 2 heures.

**TABLEAU II**

| Catalyseur | A | Cᵢ | Cᵢ' | B |
|---|---|---|---|---|
| HDN | T_{HDN} | - 40 °C | - 35 °C | - 25 °C |
| HDS | T_{HDS} | - 23 °C | - 21 °C | - 22 °C |

On constate que les catalyseurs Cᵢ et Cᵢ' conformes à l'invention ont une activité en HDS et en HDN bien supérieure à celle du catalyseur A classique. De plus, comparé au meilleur catalyseur du marché, les catalyseurs Cᵢ et C'ᵢ ont une activité en HDS équivalente à celle du catalyseur commercial B. On note, en outre, que Cᵢ et C'ᵢ ont une activité en HDN bien supérieure, ce qui peut être une garantie de stabilité du catalyseur dans le temps, l'azote étant en effet un facteur de désactivation des catalyseurs d'hydrotraitement.

## Revendications

1. Catalyseur d'hydroconversion d'hydrocarbures, comprenant un support à base d'au moins un oxyde réfractaire, au moins un métal du groupe VIII et au moins un métal du groupe VIB de la Classification Périodique des Eléments, **caractérisé en ce qu'**il comprend au moins un composé organique comprenant au moins deux groupements oximes de formule :
>C=NOR₁ (I)
avec R₁ choisi parmi l'hydrogène, les groupements alkyle, allyle, aryle, alcényle ou cycloaliphatiques, et leurs combinaisons, ces groupements étant éventuellement substitués par au moins un groupement donneur d'électrons.

2. Catalyseur selon la revendication 1, **caractérisé en ce que** le composé organique résulte de la réaction d'une amine de formule (II) ci-après 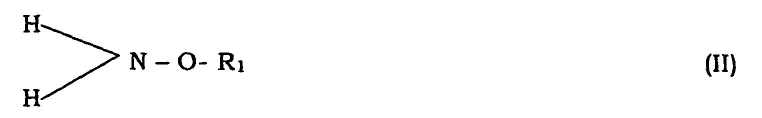 dans laquelle R₁ est choisi parmi l'atome d'hydrogène, les groupements alkyle, allyle, aryle, alcényle ou cycloaliphatiques, et leurs combinaisons, ces groupements pouvant être substitués par des groupements donneurs d'électrons, avec un composé carbonylé de formule (III) ci-après 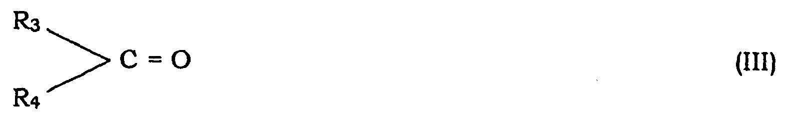 avec R₃ et R₄, identiques ou différents, choisis parmi l'hydrogène, pour seulement l'un d'entre eux, les groupements hydrocarbonés linéaires, ramifiés ou cycliques de type alkyle, aryle, allyle et alcényle et leurs combinaisons, éventuellement substitués par des groupements donneurs d'électrons.

3. Catalyseur selon la revendication 2, **caractérisé en ce que** l'amine de formule (II) est l'hydroxylamine.

4. Catalyseur selon la revendication 2, **caractérisé en ce que** le composé carbonylé de formule (III) est choisi parmi les composés carbonylés naturellement présents dans un hydrocarbure issu de la distillation d'un pétrole brut, ou les cétones et aldéhydes.

5. Catalyseur selon l'une des revendications 1 à 4, **caractérisé en ce que** ledit composé organique comprend une chaîne carbonée principale comprenant de 1 à 40 atomes de carbone, linéaire, ramifiée, en tout ou partie cyclisée, éventuellement interrompue par des hétéroatomes choisis parmi le soufre, l'azote ou l'oxygène, les atomes de carbone pouvant être substitués par l'hydrogène, des groupes alkyle, aryle, au moins deux groupements oximes et éventuellement d'autres groupements oxime, et/ou au moins un groupement hydroxylé, sulfuré, polysulfuré, un groupement thiol, thioacide, thioéther et thioester, des groupements sulfone et sulfoxyde, des groupements amine, amide et imine, des groupements carboxyliques, éther et ester, des groupements cétone et aldéhyde, des groupements nitrés, des phosphines et tout autre groupement présentant des doublets d'électrons libres.

6. Catalyseur selon l'une des revendications 1 à 5, **caractérisé en ce que** le dit composé organique est choisi parmi les dioximes et polyoximes comprenant des groupements alkyle, aryle, alkylaryle et arylalkyle.

7. Catalyseur selon la revendication 6, **caractérisé en ce que** le dit composé organique est choisi parmi la glyoxime, les monoalkylglyoximes, les dialkyloximes et les polyoximes à chaînes carbonées comprenant de 1 à 10 atomes de carbone supportant de l'hydrogène et des groupements alkyle, aryle , alkylaryle et arylalkyle.

8. Catalyseur selon la revendication 7, **caractérisé en ce que** le dit composé est le diméthylglyoxime.

9. Catalyseur selon l'une des revendications 1 à 8, **caractérisé en ce qu'**il comprend au moins 0,001 mole du dit composé organique par mole de métaux des groupes VIB et VIII.

10. Catalyseur selon la revendication 9, **caractérisé en ce qu'**il comprend de 0,001 à 10 moles du dit composé organique.

11. Procédé de préparation du catalyseur selon l'une des revendications 1 à 10, **caractérisé en ce que** ledit composé organique, dilué dans un solvant, de préférence dans un mélange d'hydrocarbures, est mis en contact avec le catalyseur comprenant un support à base d'au moins un oxyde réfractaire, au moins un métal du groupe VIII et au moins un métal du groupe VIB.

12. Procédé selon la revendication 11, **caractérisé en ce que** ledit composé organique est un composé de synthèse, obtenu par réaction d'un composé carbonylé de formule (III), contenu ou non dans les hydrocarbures à traiter, avec une amine de formule (II), en maintenant le mélange à une température comprise entre la température ambiante et 100°C, sous une pression au moins égale à la pression atmosphérique.

13. Procédé selon l'une des revendications 11 et 12, **caractérisé en ce que** ledit composé organique est préparé *in situ* dans le réacteur d'hydroconversion, dans les hydrocarbures à traiter.

14. Procédé selon l'une des revendications 11 et 12, **caractérisé en ce que** le composé organique est préparé *ex situ*, puis est déposé ou imprégné sur le catalyseur.

15. Utilisation du catalyseur selon les revendications 1 à 10 , dans un procédé d'hydrotraitement et/ou d'hydrocraquage d'hydrocarbures après sulfuration *in situ* ou *ex situ* de celui-ci au moyen d'au moins un composé soufré choisi parmi l'hydrogène sulfuré, le soufre, le CS₂, les mercaptans, les sulfures et/ou polysulfures, les coupes hydrocarbonées à point d'ébullition inférieur à 400°C contenant des composés soufrés, ou autres composés à effet sulfurant, ce composé étant introduit sous forme de gaz ou sous forme diluée dans un solvant, ou comme additif de la charge à convertir.

## Claims

1. Hydrocarbon hydroconversion catalyst, comprising a medium with a base of at least one refractory oxide, at least one metal of group VIII and at least one metal of group VIB from the Periodic Table of the Elements, **characterized in that** it has at least one organic compound with at least two oxime groups of the formula:
-C=NOR₁ (I)
where R₁ is chosen from among hydrogen, the alkyl, allyl, aryl, alkenyl or cycloaliphatic groups, and the combinations thereof, these groups being potentially substituted by at least one electron donor group.

2. Catalyst as described in claim 1, **characterized in that** the organic compound is the result of the reaction of an amine of formula (II) below 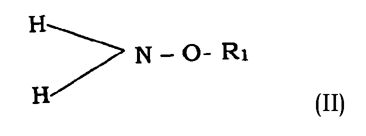 in which R₁ is chosen from among the hydrogen atom, the alkyl, allyl, aryl, alkenyl or cycloaliphatic groups, and the combinations thereof, and these groups can be substituted by electron donor groups, with a carbonyl compound of formula (III) below 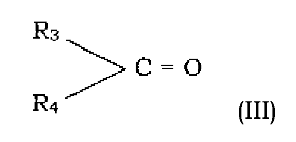 where R₃ and R₄, which are either identical to or different from one another, are chosen from among hydrogen, for only one of them, linear, ramified or cyclic hydrocarbon groups of the alkyl, aryl, allyl or alkenyl type, and the combinations thereof, which could potentially be substituted by electron donor groups.

3. Catalyst described in claim 2, **characterized in that** the amine of formula (II) is hydroxylamine.

4. Catalyst described in claim 2, **characterized in that** the carbonyl compound of formula (III) is chosen from among the carbonyl compounds that are naturally present in a hydrocarbon that is the result of the distillation of crude oil, or the ketones and the aldehydes.

5. Catalyst described in any of claims 1 through 4, **characterized in that** said organic compound has a principal carbonaceous chain of 1 to 40 carbon atoms that is linear, ramified or partially or completely cyclic, that could potentially be interrupted by heteroatoms chosen from among sulfur, nitrogen or oxygen, and the carbon atoms could be substituted by hydrogen, alkyl or aryl groups, at least two oxime groups and potentially other oxime groups, and/or at least one hydroxyl, sulfide or polysulfide group, a thiol, thioacid, thioether and thioester group, sulfone and sulfoxide groups, amine, amide and imine groups, carboxyl, ether and ester groups, ketone and aldehyde groups, nitrate groups, phosphines and any other group with free electron pairs.

6. Catalyst described in any of claims 1 through 5, **characterized in that** said organic compound is chosen from among the dioximes and polyoximes comprising alkyl, aryl, alkylaryl and arylalkyl groups.

7. Catalyst described in claim 6, **characterized in that** said organic compound is chosen from among glyoxime, monoalkylglyoximes, dialkyloximes and polyoximes with carbonaceous chains comprising 1 to 10 carbon atoms that tolerate hydrogen and the alkyl, aryl, alkylaryl and arylalkyl groups.

8. Catalyst described in claim 7, **characterized in that** said compound is dimethylglyoxime.

9. Catalyst described in any of claims 1 through 8, **characterized in that** it includes at least 0.001 mole of said organic compound per mole of metal from groups VIB and VIII.

10. Catalyst described in claim 9, **characterized in that** it includes from 0.001 to 10 moles of said organic compound.

11. Process for preparing the catalyst described in any of claims 1 through 10, **characterized in that** said organic compound, diluted in a solvent, preferably in a hydrocarbon mixture, is put in contact with the catalyst comprising a medium of a base of at least one refractory oxide, at least one metal of group VIII and at least one metal of group VIB.

12. Process described in claim 11, **characterized in that** said organic compound is a synthesized compound, obtained by reacting a carbonyl compound of formula (III), which may or may not be contained in the hydrocarbons being processed, with an amine of formula (II), by maintaining the mixture at a temperature between room temperature and 100°C, under pressure that is at least equal to atmospheric pressure.

13. Process described in either of claims 11 or 12, **characterized in that** said organic compound is prepared *in situ* in the hydroconversion reactor, in the hydrocarbons being processed.

14. Process described in either of claims 11 or 12, **characterized in that** the organic compound is prepared *ex situ*, and then deposited or impregnated on the catalyst.

15. Use of the catalyst described in claims 1 through 10, in a hydrocarbon hydrotreatment and/or hydrocracking process, after *in situ* or *ex situ* sulfidation of said catalyst using at least one sulfide compound chosen from among hydrogen sulfide, sulfur, CS₂, mercaptans, sulfides and/or polysulfides, hydrocarbon fractions with a boiling point of less than 400°C, or other compounds with a sulfidizing effect, and this compound being introduced in the form of a gas or in diluted form in a solvent, or as an additive of the load being converted.

## Patentansprüche

1. Katalysator für die Hydrokonversion von Kohlenwasserstoffen mit einem Träger basierend auf zumindest einem hitzebeständigen Oxid, zumindest einem Metall der Gruppe VIII und zumindest einem Metall der Gruppe VIB des Periodensystems der Elemente,
**dadurch gekennzeichnet, dass** es zumindest eine organische Verbindung mit zumindest zwei Oximgruppen der Formel
>C=NOR₁ (I)
enthält, wobei R₁ gewählt ist aus Wasserstoff, den Alkyl-, Allyl-, Aryl-, Alken- oder cycloaliphatischen Gruppen und ihren Kombinationen, wobei diese Gruppen möglicherweise durch zumindest eine Elektronendonatorgruppe ersetzt sind.

2. Katalysator gemäß Anspruch 1, **dadurch gekennzeichnet, dass** die organische Verbindung entsteht aus der Reaktion eines Amins mit der folgenden Formel (II) 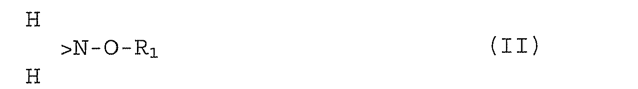 wobei R₁ gewählt ist aus einem Wasserstoffatom, den Alkyl-, Allyl-, Aryl-, Alken- oder cycloaliphatischen Gruppen und ihren Kombinationen, wobei diese Gruppen durch Elektronendonatorgruppen ersetzt sein können, mit einer Carbonylverbindung mit der folgenden Formel (III) 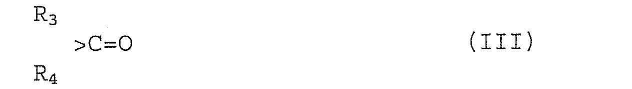 wobei R₃ und R₄ identisch oder verschieden gewählt sind aus Wasserstoff für nur eine von ihnen, den linearen, verzweigten oder cyclischen Kohlenwasserstoffgruppen vom Typ Alkyl, Aryl, Allyl und Alken und ihren Kombinationen, die möglicherweise durch Elektronendonatorgruppen ersetzt sind.

3. Katalysator gemäß Anspruch 2, **dadurch gekennzeichnet, dass** das Amin mit der Formel (II) Hydroxylamin ist.

4. Katalysator gemäß Anspruch 2, **dadurch gekennzeichnet, dass** die Carbonylverbindung mit der Formel (III) gewählt ist aus den Carbonylverbindungen, die natürlicherweise in einem Kohlenwasserstoff vorhanden sind, der aus der Destillation eines Rohöls stammt, oder den Ketonen und Aldehyden.

5. Katalysator gemäß einem der Ansprüche 1 bis 4, **dadurch gekennzeichnet, dass** die organische Verbindung eine lineare, verzweigte, ganz oder teilweise cyclische Kohlenstoffhauptkette mit 1 bis 40 Kohlenstoffatomen enthält, die möglicherweise durch Heteroatome unterbrochen ist, die gewählt sind aus Schwefel, Stickstoff oder Sauerstoff, wobei die Kohlenstoffatome ersetzt sein können durch Wasserstoff, Alkyl- und Arylgruppen, zumindest zwei Oximgruppen und möglicherweise weitere Oximgruppen, und/oder zumindest eine Hydroxyl-, Sulfid-, Polysulfidgruppe, eine Thiol-, Thioacid-, Thioether-und Thioestergruppe, Sulfon- und Sulfoxidgruppen, Amin-, Amid- und Imingruppen, Carboxyl-, Ether- und Estergruppen, Keton- und Aldehydgruppen, Nitratgruppen, Phosphanen und jeder anderen Gruppe, die freie Elektronenpaare aufweist.

6. Katalysator gemäß einem der Ansprüche 1 bis 5, **dadurch gekennzeichnet, dass** die organische Verbindung gewählt ist aus den Dioximen und Polyoximen, die Alkyl-, Aryl-, Alkylaryl- und Arylalkylgruppen enthalten.

7. Katalysator gemäß Anspruch 6, **dadurch gekennzeichnet, dass** die organische Verbindung gewählt ist aus Glyoxim, den Monoalkylglyoximen, den Dialkyloximen und den Polyoximen mit Kohlenstoffketten mit 1 bis 10 Kohlenstoffatomen, die Wasserstoff und Alkyl-, Aryl-, Alkylaryl- und Arylalkylgruppen tragen.

8. Katalysator gemäß Anspruch 7, **dadurch gekennzeichnet, dass** die Verbindung Dimethylglyoxim ist.

9. Katalysator gemäß einem der Ansprüche 1 bis 8, **dadurch gekennzeichnet, dass** er zumindest 0,001 mol der organischen Verbindung pro mol der Metalle der Gruppen VIB und VIII enthält.

10. Katalysator gemäß Anspruch 9, **dadurch gekennzeichnet, dass** er 0,001 bis 10 mol der organischen Verbindung enthält.

11. Verfahren zum Herrichten des Katalysators gemäß einem der Ansprüche 1 bis 10, **dadurch gekennzeichnet, dass** die organische Verbindung, die mit einem Lösungsmittel verdünnt ist, vorzugsweise einer Mischung von Kohlenwasserstoffen, in Kontakt mit dem Katalysator gebracht wird, der einen auf zumindest einem hitzebeständigen Oxid, zumindest einem Metall der Gruppe VIII und zumindest einem Metall der Gruppe VIB basierenden Träger enthält.

12. Verfahren gemäß Anspruch 11, **dadurch gekennzeichnet, dass** die organische Verbindung eine synthetische Verbindung ist, die gewonnen wird aus der Reaktion einer Carbonylverbindung mit der Formel (III), die in den zu behandelnden Kohlenwasserstoffen enthalten ist oder nicht, mit einem Amin mit der Formel (II), wobei die Mischung unter einem Druck, der zumindest gleich dem atmosphärischen Druck ist, auf einer Temperatur gehalten wird, die zwischen der Umgebungstemperatur und 100 °C liegt.

13. Verfahren gemäß einem der Ansprüche 11 und 12, **dadurch gekennzeichnet, dass** die organische Verbindung in situ in dem Hydrokonversionsreaktor in den zu behandelnden Kohlenwasserstoffen hergerichtet wird.

14. Verfahren gemäß einem der Ansprüche 11 und 12, **dadurch gekennzeichnet, dass** die organische Verbindung ex situ hergerichtet und dann auf den Katalysator aufgebracht wird oder ihn durchtränkt.

15. Verwendung des Katalysators gemäß Anspruch 1 bis 10 in einem Verfahren der Hydrobehandlung und/oder des Hydrocrackens von Kohlenwasserstoffen nach der Schwefelung in situ oder ex situ desselben mittels zumindest einer Schwefelverbindung, die gewählt ist aus Schwefelwasserstoff, Schwefel, CS₂, Mercaptan, den Sulfiden und/oder Polysulfiden, den Kohlenwasserstoffverschnitten mit Siedepunkt unterhalb von 400 °C, die Schwefelverbindungen oder andere Verbindungen mit schwefelnder Wirkung enthalten, wobei diese Verbindung in Gasform oder in mit einem Lösungsmittel verdünnter Form oder als Zusatz zu der zu konvertierenden Charge eingebracht wird.
